(19) **Europäisches Patentamt / European Patent Office / Office européen des brevets**

(11) **EP 3 774 681 B1**

(12) **EUROPEAN PATENT SPECIFICATION**

(45) Date of publication and mention
of the grant of the patent:
**07.05.2025 Bulletin 2025/19**

(21) Application number: **19714700.2**

(22) Date of filing: **08.04.2019**

(51) International Patent Classification (IPC):
**B32B 17/10** *(2006.01)*       **C03C 17/36** *(2006.01)*
**C03C 17/00** *(2006.01)*       **E06B 3/66** *(2006.01)*
**C03C 17/34** *(2006.01)*

(52) Cooperative Patent Classification (CPC):
**C03C 17/002; B32B 17/10055; B32B 17/10091;
B32B 17/10174; C03C 17/3441; C03C 17/36;
C03C 17/3626; C03C 17/3644; C03C 17/366;
C03C 17/3681; E06B 3/6617; E06B 3/6621;**
C03C 2217/77; C03C 2217/94; C03C 2218/365

(86) International application number:
**PCT/EP2019/058830**

(87) International publication number:
**WO 2019/197347 (17.10.2019 Gazette 2019/42)**

(54) **MULTIPLE GLAZING UNIT**

MEHRFACHVERGLASUNGSEINHEIT

UNITÉ DE VITRAGE MULTIPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2018 EP 18167066**

(43) Date of publication of application:
**17.02.2021 Bulletin 2021/07**

(73) Proprietor: **AGC Glass Europe
1348 Louvain-La-Neuve (BE)**

(72) Inventor: **SCHNEIDER, Pierre
37370 Saint Christophe sur le Nais (FR)**

(74) Representative: **AGC Glass Europe
Technovation Centre
Intellectual Property Department
Rue Louis Blériot 12
6041 Gosselies (BE)**

(56) References cited:
**EP-A1- 2 918 765         EP-A1- 3 141 534
WO-A1-2013/090016    US-A1- 2011 262 694
US-A1- 2014 010 976    US-A1- 2014 237 917**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The invention relates to a multiple glazing unit comprising at least three glass panes, which are held apart by spacers, in which at least two intermediate gas-filled cavities each lie between two glass panes, said glazing unit comprising an inner glass pane bearing insulating coatings on both of its faces.

The invention relates more particularly to a triple glazing unit comprising three glass panes that are held apart by spacers, in which two intermediate gas-filled cavities each lie between two panes, said glazing unit comprising an inner, middle glass pane bearing insulating coatings on both of its faces.

For the purpose of the description of the present invention, functional coatings that are able to act on solar radiation and/or long-wavelength infrared radiation are named insulating coatings. Such an insulating coating generally comprises one or more individual layers that are deposited in a sequence on a glass sheet. Herein, a film, for instance a dielectric film or a protective film, may comprise a single layer or a group of two or more layers, with the layers of this film fulfilling at least one common function or purpose of this film.

The invention also relates to the use of panes bearing insulating coatings on both of the panes' faces for manufacturing thermal-insulation and/or solar-protection multiple glazing units.

These multiple glazing units may equally well be intended for fitting into buildings and into transportation means, especially with a view to reducing air-conditioning load and/or preventing excessive overheating (the glazing is then called "solar control" glazing) and/or reducing the amount of energy dissipated to the outside (the glazing is said to be "low-E" or "low-emissivity" glazing) in buildings and passenger compartments, brought about by the ever increasing use of glazed surfaces. In general terms, multiple glazing units are integrated into an enclosure, for example a wall of a building, separating the interior of the enclosure from the exterior of the enclosure.

The patent application US 2011/262694 A1 describes a multiple glazing unit including at least three glass substrates, wherein the inner glass pane is bearing one metal-based insulating coating on one face and one antireflection (AR) coating on the opposite face. High performance insulating coatings are nowadays generally stacks of multiple layers wherein a functional layer, that is the layer mainly responsible for acting on solar radiation and/or long-wavelength infrared radiation, is a metallic functional layer. It is well known that such metal-based insulating coatings are the standard choice of insulating coatings for best opto-energetical performance, whether it is for solar control performance or for low-emissivity performance. These insulating coatings that are based on metallic functional layers may comprise one or more metallic functional layers, for example two or three metallic functional layers, especially metallic functional layers based on silver or on silver-containing metal alloys. In this type of metal-based insulating coating, each functional layer lies between two dielectric films, each comprising in general several layers that are each made of a dielectric material of the nitride type, and especially silicon nitride or aluminum nitride or of the oxide type or of the oxynitride type. From an optical standpoint, the purpose of these films that flank the metallic functional layer is to "antireflect" this metallic functional layer and to control the colors in transmission and in reflection of the coated glazing. These same or other additional layers may be present for fulfilling other functions, such as for durability or for increasing absorption for example. A blocker layer or contact layer is sometimes inserted between a or each dielectric film and the metallic functional layer, the blocker layer placed beneath the functional layer, facing the pane, protects said functional layer during an optional high-temperature heat treatment of the bending and/or tempering type, and the blocker layer placed on the functional layer on the opposite side from the pane protects this layer from any degradation during the deposition of the upper dielectric film and during an optional high-temperature heat treatment of the bending and/or tempering type.

In a high performance multiple glazing structure, comprising three or more glass panes, one or both of the panes that form the outermost glass panes of the glazing usually bear a metal-based insulating coating on the side facing an intermediate gas-filled cavity. For instance in a in a triple glazing structure the pane bearing the insulating film may be on face 2 or on face 5 when considering the incident direction of the solar light passing through the faces in increasing order of their number, starting with the outermost face which is denoted by the number 1.

However it is difficult, sometimes even impossible, to combine such metal-based insulating coatings on the outermost glass panes of a multiple glazing with other functionalities on the same face, such as for example electrochromic or thermochromic functionalities. Also the combination of such metal-based insulating coatings with enamel layers, that may be applied for aesthetic purposes, is complicated and usually requires the removal of the insulating coating before applying the enamel or requires the use of masks while depositing the insulating coating on the glass pane. This is in particular true for white enamels.

In a multiple glazing structure the inner, middle glass pane or one of the inner glass panes, if there is more than one, may also bear an insulating coating. For instance in a triple glazing structure, the middle pane may bear an insulating coating on face 3 or on face 4. This frees up the outermost glass panes from their insulating coatings so that other functionalities can be applied, such as for example enamels, electrochromic or thermochromic coatings. Such a glazing however generally shows lower opto-energetical performances than a glazing with coatings on both outermost glass panes.

There is therefore a need in the art for multiple glazings having three or more glass panes and improved opto-energetical performance without any insulating coating on the outermost glass panes.

## Summary of invention

The objective of the invention in particular is to remedy the cited disadvantages and resolving the technical problem, i.e. to provide a multiple glazing unit with acceptable opto-energetical performance and bearing no insulating coating on the outermost glass panes.

The inventors have found that the opto-energetical performance of multiple glazing units, comprising at least three glass panes, bearing no insulating coatings on the outermost glass panes, could be improved by combining insulating coatings on opposite faces of the same inner glass pane. However it appeared that unacceptable scratches appeared on one of the two insulating coatings. Indeed they stumbled on the problem that in any classical multiple glazing assembly line, the glass panes travel in an inclined and almost vertical position on a conveyor. Therefore one of the faces of each glass pane being assembled is necessarily in contact with the rotating support elements, for example rollers, of this conveyor. In the usual multiple glazings this did not pose any problem as the uncoated side of the glass pane will be in contact with the rollers. However many metal-based insulating coatings were damaged by the contact with the rotating supporting elements and all tested metal-based insulating coatings were damaged when one or more rotating support element, for example one or more rollers, were blocked, which is a frequent fault on these conveyors.

Surprisingly it was found that a multiple glazing, comprising at least three glass panes and in particular a triple glazing, with acceptable opto-energetical performance could be manufactured using two outermost panes bearing no insulating coating and using an inner glass pane bearing insulating coatings on both faces, on one face a metal-based insulating coating and on the other face a transparent conductive oxide-based insulating coating. Indeed it was found that this inner glass pane could be transported on a multiple glazing assembly line with the transparent conductive oxide-based insulating coating against the rollers, without causing any visible scratches in this coating, even when a rotating support element such as a roller was blocked.

The aim of the present invention is thus to solve the problems presented above, by providing a multiple glazing unit, comprising at least three glass panes, two outermost glass panes and at least one inner glass pane, which are held apart by spacers, in which at least two intermediate gas-filled cavities each lie between two glass panes, said at least one inner glass pane bearing one metal-based insulating coating on one face and one transparent conductive oxide-based insulating coating on the opposite face.

Furthermore, in a multiple glazing unit, the combination on at least one inner glass pane of one metal-based insulating coating on one face and one transparent conductive oxide-based insulating coating on the opposite face leads at the same time to improved insulating properties.

It is noted that the invention relates to all possible combinations of embodiments described and of features recited in the claims.

## Brief description of drawings

FIG. 1 is a schematic cross-sectional side view of a multiple glazing in accordance with certain embodiments of the present invention.
FIG. 2 is a schematic cross-sectional, partially broken away side view of a multiple glazing in accordance with certain embodiments of the present invention.

## Description of embodiments

In all its embodiments, the multiple glazing unit of the present invention comprises at least three glass panes, even if not always explicitly stated.

The present invention is the multiple glazing unit according to claim 1 and the process for assembling a multiple glazing unit according to claim 17.

According to an embodiment, the multiple glazing unit of present invention is a triple glazing unit comprising two outermost glass panes and one inner glass pane, wherein the inner glass pane bears on one of its faces a metal-based insulating coating and on its opposite face a transparent conductive oxide-based (TCO-based) insulating coating.

According to an embodiment of the present invention one or both of the outermost glass panes of the multiple glazing unit of the present invention bear no insulating coatings.

According to an additional embodiment, the multiple glazing unit of the present invention additionally comprises on at least part of one or both of its outermost glass panes a coating chosen among an solar-control coating, an enamel coating, a paint coating, an electrochromic coating or a thermochromic coating. In a particular embodiment of the present invention this coating is placed on the face of an outermost glass pane facing an intermediate gas-filled cavity.

According to the present invention the metal-based insulating coating comprises an alternating arrangement of n infrared reflecting metallic functional layers and n+1 dielectric films, with n > 1, such that each functional layer is surrounded by dielectric films.

According to the present disclosure the metal-based insulating coating may comprise one, two, or three infrared reflecting metallic functional layers. In particular, the metal-based insulating coating may comprise metallic functional layers of silver or silver-containing metal alloys or may essentially consisting of silver. Alternately, the metallic functional layer may comprise gold or copper. In particular, the metal-based insulating coating provides a glass pane with a normal emissivity of 0.1 or less, preferably of 0.08 or less and very advantageously of 0.05 or less.

According to the present invention, each infrared reflecting metallic functional layer of the metal-based insulating coating is surrounded by two dielectric films, each comprising in general one or more dielectric layers. The dielectric layers may comprise nitrides, oxides or oxynitrides. In particular, the dielectrics may comprise nitrides, oxides or oxy nitrides of silicon, aluminium, tin, zinc, titanium, zirconium or niobium. Furthermore, the dielectric layers may comprise a mixture of two or more of the nitrides, oxides or oxy nitrides of silicon, aluminium, tin, zinc, titanium, zirconium or niobium.

According to an embodiment of the present invention each infrared reflecting metallic functional layer of the metal-based insulating coating may be in direct contact with one or more contact layers, for instance comprising zinc oxide, optionally doped with aluminium or gallium, or comprising titanium, nickel, chromium, palladium, tungsten, or niobium or comprising oxides or sub-oxides of titanium, nickel, chromium, palladium, tungsten, or niobium or comprising nitrides or oxynitrides of titanium, nickel, chromium, palladium, tungsten, or niobium. In an alternate embodiment of the present invention, at least one contact layers at least one of the infrared reflecting functional layers, comprises an oxide of zinc combined with at least two elements selected from the group comprising titanium, aluminium, indium, gallium, vanadium, molybdenum, magnesium, chromium, zirconium, copper, silicon, or the like, wherein the at least one contact layer is above or below and in direct contact with the at least one of the infrared reflecting functional layers. The "in direct contact with", is understood, in the present invention, to mean that no intermediate layer is interposed between the two layers mentioned.

According to an embodiment of the present invention the metal-based insulating coating may further comprise an absorbing layer, for example inserted in a dielectric film or below or above a dielectric film. It may also comprise an uppermost protective film for chemical and/or mechanical durability The uppermost protective film may comprise a silicon nitride comprising layer and may further comprise on the silicon nitride based layer a layer comprising an oxide of titanium and/or of zirconium.

According to an embodiment of the present invention the metal-based insulating coating comprises an alternating arrangement of 2 infrared reflecting metallic functional layers and 3 dielectric films, such that each functional layer is surrounded by dielectric films and a barrier layer directly superposed on the last functional layer furthest away from the substrate, wherein:

(i) the first dielectric film closest to the substrate comprises a layer made from an oxide, in direct contact with the substrate,
(ii) the internal dielectric film or coatings surrounded by two functional layers comprise a layer made from a silicon nitride or a silicon oxide with a thickness greater than 5 nm surrounded on both sides by layers made from an oxide other than silicon oxide with thicknesses greater than 5 nm,
(iii) the barrier layer is based on zinc oxide or consists of an indium oxide possibly doped with tin, and
(iv) the last dielectric film furthest away from the substrate comprises, in order starting from the substrate: a layer made from an oxide other than silicon oxide with a thickness greater than 3 nm and a layer made from a silicon nitride or a silicon oxide with a thickness greater than 10 nm.

Depending on the nature of the metal-based insulating coating it may be useful to delete the edges of the coating to ensure good adhesion of the inner glass pane to the spacers and/or to avoid deterioration of the coating.

According to the present invention, the transparent conductive oxide-based (TCO-based) insulating coating comprises an infrared reflecting transparent conductive oxide layer (TCO layer) chosen from mixed indium tin oxide (ITO), in particular ITO with an $In_2O_3/SnO_2$ mass ratio of 90/10 or more, tin oxide doped with fluorine ($SnO_2$:F), in particular doped with 0.5 to 2 atomic % of fluorine or with antimony (Sb), aluminum-doped ZnO (AZO), gallium-doped ZnO (GZO), gallium and aluminum co-doped ZnO (AGZO), and niobium-doped titanium oxide ($TiO_2$:Nb). In particular, the TCO-based insulating coating provides a glass pane with a normal emissivity of 0.7 or less, of 0.5 or less, 0.4 or less or of 0.15 or less. In particular, the TCO-based insulating coatings of the present invention contain no metallic layers.

According to an embodiment of the present invention, the TCO-based insulating coating may further comprise in between the glass pane and the TCO layer an iridescence suppressing film. In particular, the iridescence suppressing film comprises at least one layer having a refractive index at a wavelength of 550nm of between 1.7 and 2.5. In particular, the iridescence suppressing film comprises at least one layer having a refractive index at a wavelength of 550nm of between 1.7 and 2.5. chosen from a titanium oxide comprising layer, a nitride-based layer, especially comprising silicon nitride and/or aluminium nitride, a tin oxide comprising layer, a mixed layer of silicon oxide and tin oxide, silicon carbide or titanium oxide. In particular, the iridescence suppressing film comprises at least one layer having a refractive index at a wavelength of 550nm of between 1.4 and 1.68. In particular, the iridescence suppressing film comprises at least one layer having a refractive index at a wavelength of 550nm of between 1.4 and 1.68, which comprises, or essentially comprises, silicon oxide. Silicon oxide layers may conveniently be doped with aluminium.

In a particular embodiment of the present invention, the iridescence suppressing film comprises, in sequence as counted from the pane surface, a first layer having a refractive index at a wavelength of 550nm of between 1.7 and 2.5 and a second layer having a refractive index at a wavelength of 550 nm of between 1.4 and 1.68. In an embodiment the first layer is chosen from a titanium oxide comprising layer, a nitride-based layer, especially comprising silicon nitride and/or aluminum nitride, a tin oxide comprising layer, a mixed layer of silicon oxide and tin oxide or titanium oxide, or a layer of silicon oxycarbide (SiOxCy) and the second layer comprises, or essentially consists of silicon oxide.

The thicknesses of the one or more layers in the iridescence suppressing film are chosen so as to make the color in reflection of the TCO-based insulating layer coated glass pane as neutral as possible, with CIELAB color coordinates a* and b* as close as possible to 0, also when viewed from an angle.

Additional layers may be deposited above the TCO layer for improving chemical or mechanical resistance, this may in particular be a silicon nitride comprising layer, and/or for reducing reflectance and or improving transmittance, in particular energetical transmittance, this may in particular be a silicon oxide comprising layer.

Regarding the relative positions of layers in the layer stacks, the terms "above" and "below" in the present description mean that the layer which is "above" another layer is positioned in the sequence of layers starting from the glass further away from the glass and that the layer which is "below" another layer is positioned in the sequence of layers starting from the glass closer to the glass..

In exemplary embodiments, the TCO-based insulating coating includes the following layers in succession, from the glass: /silicon nitride/silicon oxide/ITO/optionally silicon nitride/silicon oxide, additional intermediate layers possibly being inserted between these various layers ; or glass/silicon oxide or oxycarbide/SnO$_2$:F/ optionally silicon oxide, additional intermediate layers possibly being inserted between these various layers, or glass/tin oxide/silicon oxide/SnO$_2$:F/ optionally silicon oxide.

Using a layer of silicon oxide as the last layer in the TCO-based insulating coatings interestingly reduces the reflection of visible light of the glazing. When present, the thickness of the topmost silicon oxide layer may be in the range from 40 to 90 nm.

The invention also relates to a glass pane capable of being used to form an inner pane wall of a multiple glazing unit as described above, incorporating on one face a metal-based insulating coating and on the opposite face a TCO-based insulating coating.

Another subject of the present invention is the use of a glass pane such as described above in the manufacture of a multiple glazing unit, said glass pane forming an inner glass pane said glazing unit.

According to an embodiment of the present invention the one or more infrared reflecting metallic functional layer of the metal-based insulating coating has a the physical thickness in the range from 6 to 16 nm. In particular, each infrared reflecting metallic functional layer of the metal-based insulating coating has a physical thickness in the range from 6 to 16 nm.

According to an embodiment of the present invention the TCO-based insulating coating comprises a TCO having a thickness in the range from 50 to 800 nm.

According to an embodiment of the present invention the one or more infrared reflecting metallic functional layer of the metal-based insulating coating has a the physical thickness in the range from 6 to 16 nm and the TCO-based insulating coating comprises a TCO having a thickness in the range from 50 to 800 nm.

In particular the one or more infrared reflecting metallic functional layer of the metal-based insulating coating has a the physical thickness in the range from 8 to 15 nm and the TCO-based insulating coating comprises a TCO having a thickness in the range from 80 to 350 nm.

In another particular embodiment the one or more infrared reflecting metallic functional layer of the metal-based insulating coating has a the physical thickness in the range from 10 to 12 nm and the TCO-based insulating coating comprises a TCO having a thickness in the range from 50 to 250 nm.

In another particular embodiment the one or more infrared reflecting metallic functional layer of the metal-based insulating coating has a the physical thickness in the range from 12 to 16 nm and the TCO-based insulating coating comprises a TCO having a thickness in the range from 100 to 450 nm.

In an embodiment of the present invention the TCO-based insulating coating comprises a single iridescence suppressing layer of silicon oxycarbide having a refractive index at a wavelength of 550nm in the range from 1.65 to 1.75 and a thickness comprises between 40 and 180nm and a TCO layer of fluorine doped tin oxide having a thickness in the range from 150 to 800 nm. In a particular embodiment this silicon oxycarbide layer has a thickness in the range from 50 to 120 nm and a fluorine doped tin oxide layer thickness in the range from 150 to 350 nm. The TCO-based insulating coating may for instance comprise the following sequence of layers starting from the glass: $SnO_2$ (30 nm) / $SiO_2$ (30 nm) / $SnO_2$:F (370 nm).

The insulating coatings of the present invention may be deposited on the glass panes by deposition processes well known in the art such as magnetron sputtering, chemical vapor deposition (CVD) or plasma enhanced chemical vapor deposition. In particular, the metal-base insulating coating is deposited using magnetron sputtering. The TCO-based insulating coating may be deposited using magnetron sputtering. When the TCO layer is based on tin oxide, the insulating coating is preferentially deposited using chemical vapor deposition. Chemical vapor deposited TCO-based insulating coatings were found to be crystalline and mechanically more resistant than magnetron sputtered coatings. Also TCO-based insulating layers having an average roughness Rq of less than 12 nm, even less than 7 nm, and even less than 5 nm were found to be even less sensitive to scratches during handling. In a particularly useful embodiment, the TCO-based insulating coatings are deposited by chemical vapor deposition and subsequently polished so as to reduce their surface roughness to an average roughness Rq of less than 12 nm, even less than 7 nm, or even less than 5 nm.

The roughness value Rq is the root mean square roughness of the differences of the height z relative to the average height z⁻. The height profile is evaluated by atomic force microscopy (AFM) on an area of 10 x 10 $\mu m^2$ in N = 512 lines and M = 512 measurement points according to the following formula:

$$R_q = \sqrt{\frac{1}{M\,N} \sum_{x=1}^{N} \sum_{y=1}^{M} \left( z(x,y) - \bar{z}(N,M) \right)^2}$$

The expression "glass pane" is understood, in the present invention. to mean a single sheet of glass or an assembly of glass sheets, especially two glass sheets, joined together, to form what is called a laminated structure, by a polymer interlayer, especially a PVB (polyvinyl butyral) interlayer, using techniques well known in the field.

According to an embodiment of the present invention at least one of the two outermost glass panes is an assembly of two glass sheets. According to a particular embodiment of the present invention at least one of the two outermost glass panes is an assembly of two glass sheets wherein an enamel coating is deposited on one of the glass sheets on a face in contact with the polymer interlayer. This has the advantage that the glass sheet in contact with the exterior may be chosen from a glass whose color does not affect the color of the enamel coating as seen from the exterior and the glass sheet in contact with the intermediate gas-filled space may be chosen from any available color without it affecting the color of the enamel coating as seen from the exterior.

In an embodiment of the present invention the at least one inner glass pane is an assembly of two glass sheets. The metal-based insulating coating and the TCO-based insulating coating are then on the faces of each glass sheet facing the intermediate gas-filled space and not facing the polymer interlayer. This has the advantage that none of the two insulating coatings needs to be deposited on the tin side of a glass sheet. The tin side of a glass sheet, that is the side of a glass sheet that has been in contact with the glass float's tin bath may influence a coating's uniformity, chemical stability or thermal stability and thus lead to defects.

Any glass pane according to the invention are made of glass whose matrix composition is not particularly limited and may thus belong to different glass categories. The glass may be a soda-lime-silicate glass, an alumino-silicate glass, an alkali-free glass, a boro-silicate glass, etc. Preferably, the glass pane of the invention is made of a soda-lime glass or an alumino-silicate glass.

According to a particularly useful embodiment of the present invention at least one of the two outermost glass panes have a high light transmittance of 91 to 92% (measured according to standard EN410). Additionally or separately the at least one inner glass pane has have a high light transmittance of 91 to 92% (measured according to standard EN410).

According to an embodiment of the invention, the glass pane has a composition comprising, in a content expressed in percentages of the total weight of the glass:

| | | | |
|---|---|---|---|
| $SiO_2$ | 55 | - | 85% |
| $Al_2O_3$ | 0 | - | 30% |
| $B_2O_3$ 0 | | - | 20% |
| $Na_2O$ | 0 | - | 25% |
| CaO | 0 | - | 20% |
| MgO | 0 | - | 15% |
| $K_2O$ | 0 | - | 20% |
| BaO | 0 - 20%. | | |

In a preferred manner, the glass pane has a composition comprising, in a content expressed in percentages of the total weight of the glass:

| | | | |
|---|---|---|---|
| $SiO_2$ | 55 | - | 78% |
| $Al_2O_3$ | 0 | - | 18% |
| $B_2O_3$ | 0 | - | 18% |
| $Na_2O$ | 5 | - | 20% |
| CaO | 0 | - | 10% |
| MgO | 0 | - | 10% |
| $K_2O$ | 0 | - | 10% |
| BaO | 0 - 5%. | | |

In a more preferred manner, the glass pane has a composition comprising, in a content expressed in percentages of the total weight of the glass:

| | | | |
|---|---|---|---|
| $SiO_2$ | 65 | - | 78% |
| $Al_2O_3$ | 0 | - | 6% |
| $B_2O_3$ | 0 | - | 4% |
| CaO | 0 | - | 10% |
| MgO | 0 | - | 10% |
| $Na_2O$ | 5 | - | 20% |
| $K_2O$ | 0 | - | 10% |
| BaO | 0 - 5%. | | |

Such a soda-lime-type base glass composition has the advantage to be inexpensive even if it is less mechanically resistant as such.

Ideally, according to this last embodiment, the glass composition does not comprise $B_2O_3$ (meaning that it is not intentionally added, but could be present as undesired impurities in very low amounts).

In an alternative more preferred manner, the glass pane has a composition comprising, in a content expressed in percentages of the total weight of the glass:

| | | | |
|---|---|---|---|
| $SiO_2$ | 55 | - | 70% |
| $Al_2O_3$ | 6 | - | 18% |
| $B_2O_3$ | 0 | - | 4% |
| CaO | 0 | - | 10% |
| MgO | 0 | - | 10% |
| $Na_2O$ | 5 | - | 20% |
| $K_2O$ | 0 | - | 10% |
| BaO | 0 - 5%. | | |

Such an alumino-silicate-type base glass composition has the advantage to be more mechanically resistant but it is more expensive than soda-lime.

Ideally, according to this last embodiment, the glass composition does not comprise $B_2O_3$ (meaning that it is not intentionally added, but could be present as undesired impurities in very low amounts).

According to an advantageous embodiment of the invention, combinable with previous embodiments on base glass composition, any glass pane has a composition comprising a total iron content (expressed in terms of $Fe_2O_3$) ranging from 0.002 to 0.06 weight%. A low total iron content (expressed in the form of $Fe_2O_3$) of less than or equal to 0.06 weight% makes it possible to obtain a glass pane with high transmittance, almost no visible coloration and allowing a high degree of flexibility in aesthetic designs (for example, getting no distortion when white silk printing of some glass elements of smartphones). The minimum value makes it possible not to be excessively damaging to the cost of the glass as such low iron values often require expensive high purity starting materials. Preferably, the composition comprises a total iron content (expressed in the form of $Fe_2O_3$) ranging from 0.002 to 0.04 weight%. More preferably, the composition comprises a total iron content (expressed in the form of $Fe_2O_3$) ranging from 0.002 to 0.02 weight%. In the most preferred embodiment, the composition comprises a total iron content (expressed in the form of $Fe_2O_3$) ranging from 0.002 to 0.015 weight %.

According to a preferred embodiment, the glass pane of the invention is a float glass pane. The term "float glass pane" is understood to mean a glass pane formed by the float process, which is well known in the art.

Any glass pane of the multiple glazing units according to the invention may have a thickness of from 0.1 to 25 mm. Advantageously, the glass pane according to the invention has preferably a thickness of from 2 to 10 mm.

The invention also relates to a multiple glazing unit wherein one or more glass panes are heat strengthened or tempered. All previously described embodiments also apply to the invention of heat strengthened or tempered glass pane.

The at least three glass panes in of the multiple glazing units of the present invention are positioned in distinct planes parallel to each other as is usual in all multiple glazing units. The thickness of any one or more of the at least two intermediate gas-filled cavities, enclosed between two glass of the at least three panes, may be in the range from 6 to 30 mm, depending on the insulation requirements and on the integration of additional elements, for example structural or mechanical elements, in between the glass panes. This thickness of an intermediate gas-filled cavity corresponds to the distance in between the two glass panes enclosing it. The glass panes of the multiple glazing unit of the present invention may be held in position by one single spacer spanning the whole distance between the two outermost glass panes. The glass panes of the multiple glazing unit of the present invention may also be held in position by individual spacers in between any two glass panes enclosing an intermediate gas-filled cavity.

**In** an embodiment of the present invention all the glass panes of the multiple glazing unit have the same dimensions of length and width. In an alternate embodiment of the present invention the at least one inner glass pane of the multiple glazing unit has smaller dimensions of length and/or width than at least one of the two outermost glass panes. In particular, the at least one inner glass pane of the multiple glazing unit has smaller dimensions of length and/or width than the two outermost glass panes. Thereby an interspace is created in between the two outermost glass panes along at least one edge of the multiple glazing unit in which different mechanical elements may be placed. These mechanical elements may be structural elements and/or elements of an opening or sliding mechanism. These mechanical elements may be completely or at least partly positioned within the interspace.

**In** any embodiment of the multiple glazing unit of the present invention, the two outermost glass panes may have the same dimensions of length and width or not. The outermost glass pane facing the exterior of an enclosure may have a smaller dimension of length and/or width than the outermost glass sheet facing the interior of an enclosure. The outermost glass pane facing the exterior of an enclosure may have a larger dimension of length and/or width than the outermost glass sheet facing the interior of an enclosure.

Embodiments of the invention will now be further described, by way of example only, together with some comparative examples, not in accordance with the invention. The following examples are provided for illustrative purposes, and are not intended to limit the scope of this invention.

The person skilled in the art realizes that the present invention by no means is limited to the preferred embodiments described above. On the contrary, many modifications and variations are possible within the scope of the appended claims.

Details and advantageous features of the invention will become clear from the following non-limiting figures and examples.

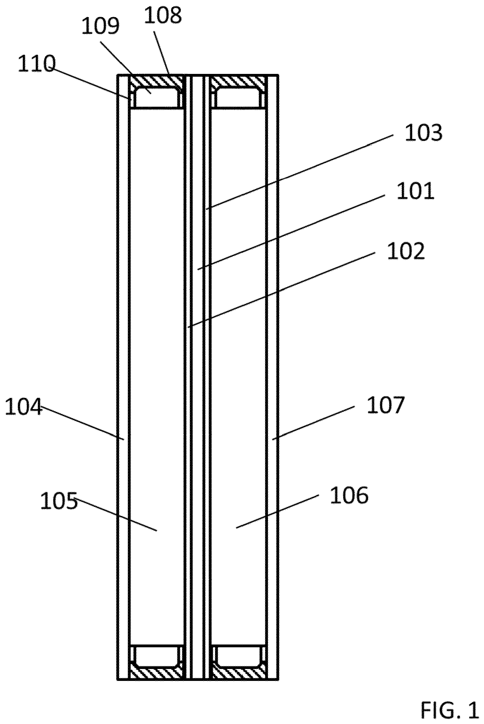

FIG. 1 which shows a schematic cross section of an embodiment of a multiple glazing unit according to the present invention, comprising two outermost glass panes 104, 107, and one inner glass pane 101. The two outermost glass panes are separated from the inner glass pane, held firmly in place and facing the inner glass pane by spacers 109 which are fastened to the glass panes by sealants 110 and by optional structural sealant 108, the assembly bounding two intermediate gas-filled cavities 105 and 106. According to the invention, the gas may be air or argon or krypton or a mixture of these gasses.

The inner glass pane 101 bears a metal-based insulating coating 102 on one face and a TCO-based insulating coating 103 on the opposite face.

The two outermost glass panes 104, 107 bear no insulating coating but may bear other functional coatings that are not shown.

Depending on its intended use either outermost glass sheet may be turned towards the outside of the building or transportation means.

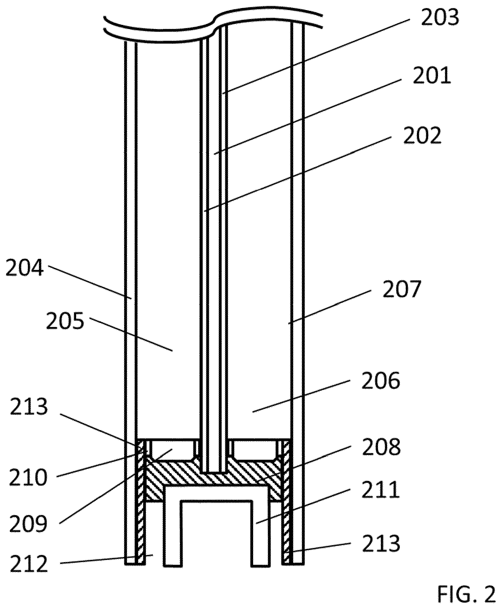

FIG. 2 shows a schematic cross section of the lower half of an embodiment of a multiple glazing unit comprising two outermost glass panes 204, 207, and one inner glass pane 201. The two outermost glass panes are separated from the inner glass pane, held firmly in place and facing the inner glass pane by spacers 209 which are fastened to the glass panes by sealants 210 and by structural sealant 208, the assembly bounding two intermediate gas-filled cavities 205 and 206. According to the invention, the gas may be air or argon or krypton or a mixture of these gasses.

The inner glass pane 201 bears a metal-based insulating coating 202 on one face and a TCO-based insulating coating 203 on the opposite face. The two outermost glass panes 204, 207 bear, for esthetical purposes, an enamel coating 213 around the edge of the glass pane that hides a mechanical element 211, which may be a structural element and/or elements of an opening or sliding mechanism and the surrounding air space 212. The two outermost glass panes 204, 207 bear no insulating coating.

The structural element may for example provide a bending stiffness improvement. It may be present on at least one of the edges of the glazing, enclosed in between the two outermost glass panes. It may also be replaced by a sliding, tilting or rotating mechanism for the glazing.

The present invention further relates to a process for assembling a multiple glazing unit, in particular a triple glazing unit, comprising: providing a first outermost glass pane, providing an inner glass pane, providing a second outermost glass pane, transporting the first outermost glass pane, the inner glass pane, and second outermost glass pane on a conveyor, characterized in that the inner glass pane bears one metal-based insulating coating on one face and one transparent conductive oxide-based insulating coating on the opposite face and in that the inner glass pane is transported on the conveyor with the face bearing the transparent conductive oxide-based insulating coating in contact with the conveyor.

The present invention in particular relates to this process for assembling a multiple glazing unit according to any one or more embodiments of the multiple glazing unit of the present invention described hereinabove, in particular regarding the characteristics of the glass panes. The process may further include providing a single spacer for positioning the at least three glass panes. The process may also include providing at least two spacers for positioning the at least three glass panes. The process may further comprise providing and a mechanical element in an interspace in between the two outermost glass panes.

## Examples

Table 1 lists several triple glazing units (TGUs) according to the present invention.

The TGUs comprise two outermost glass panes, one exterior outermost glass pane (EXT) which is in contact with the exterior of the building or transportation means in which the TGU is installed, and one interior outermost glass pane (INT) which is in contact with the interior of the building or transportation means in which the TGU is installed. The outermost glass panes bear no insulating coatings.

The examples show different possible combinations of metal-based insulating coatings (Metal1, Metal2) on one face of the inner glass pane (INN) and of TCO-based insulating coatings (TCO1, TCO2, TCO3) on the opposite face of the inner glass pane. The insulating coatings may be placed on face 3 (IC pos3) or on face 4 (IC pos4) on the inner glass pane. The intermediate gas-filled cavities (CAV) in all examples are filled with a 90/10 Argon/air mixture and may have different thicknesses depending on the spacers that are used.

Conventionally, the faces of a triple glazing unit are numbered starting from the exterior of a building. A triple glazing unit thus comprises 6 faces, face 1 is on the outside of the building and is the face of the exterior outermost glass pane in contact with the exterior. Face 6 is inside the building and is the face of the interior outermost glass pane in contact with the interior. Faces 2 and 5 of the respective outermost glass panes being internal to the triple glazing unit, each facing a gas-filled cavity. Face 3 is the face of the inner glass pane turned towards the exterior and face 4 is the face of the inner glass pane turned towards the interior of the building.

Table 2 shows opto-energetical properties obtained with the different exemplary TGUs. TL is the light transmittance measured with illuminant D65/2° according to standard EN410-2011, the solar factor SF is measured according to the standard EN410-2011, the glazing U-value Ug is determined according to standard EN673-2011. The combination of on the inner glass pane one metal-based insulating coating on one face and one transparent conductive oxide-based insulating coating on the opposite face leads to particularly low U-values, without a transparent conductive oxide-based insulating coating U-values of about 1 would be obtained in the same multiple glazing structures.

Table 1

| Ex. | EXT | CAV | INN | | | CAV | INT |
|-----|-----|-----|-----|---|---|-----|-----|
| | | thickness [mm] | IC pos 3 | glass type | IC pos 4 | thickness [mm] | |
| 1 | 6CV | 18 | TCO3 | 4CV | Metal1 | 24 | 4CV |
| 2 | 6CV | 18 | Metal1 | 4CV | TCO3 | 24 | 4CV |
| 3 | 6CV | 18 | Metal1 | 4CV | TCO2 | 24 | 4CV |
| 4 | 6CV | 18 | Metal1 | 4CV | TCO1 | 24 | 4CV |
| 5 | 44CV | 14 | Metal1 | 4CV | TCO2 | 24 | 4CV |
| 6 | 6CV | 18 | Metal2 | 4CV | TCO2 | 24 | 4CV |
| 7 | 6CV | 18 | Metal1 | 4CL | TCO3 | 24 | 4CV |

(continued)

| Ex. | EXT | CAV | INN | | | CAV | INT |
|---|---|---|---|---|---|---|---|
| | | thickness [mm] | IC pos 3 | glass type | IC pos 4 | thickness [mm] | |
| 8 | 6CV | 18 | Metal1 | 4CL | TCO2 | 24 | 4CV |

Table 3 gives further explanations on the types of glass and types of coatings used in the examples.

Table 2

| Ex. | optoenergetic performance | | |
|---|---|---|---|
| | TL | SF | Ug |
| 1 | 72 | 59 | 0,6 |
| 2 | 71 | 58 | 0,6 |
| 3 | 71 | 58 | 0,6 |
| 4 | 55 | 59 | 0,7 |
| 5 | 71 | 54 | 0,7 |
| 6 | 67 | 51 | 0,6 |
| 7 | 71 | 58 | 0,6 |
| 8 | 70 | 58 | 0,6 |

Table 3

| | glass thickness [mm] | glass type |
|---|---|---|
| 6CV | 6 | Low iron neutral float glass, sold by the Applicant company under the trade name Planibel Clearvision® |
| 4CV | 4 | Low iron neutral float glass, sold by the Applicant company under the trade name Planibel Clearvision® |
| 44CV | 2x4 | 2 sheets of low iron neutral float glass, sold by the Applicant under the trade name Planibel Clearvision, laminated with 2 panes of PVB |
| 4CL | 4 | clear neutral float glass, sold by the Applicant company under the trade name Planibel Clearlite® |
| | | |
| | coating type | |
| TCO1 | TCO-based insulating coating of the following layer sequence: Glass/$SiO_xC_y$/$SnO_2$:Sb roughness Rq 9 to 12 nm, by CVD | |
| TCO2 | TCO-based insulating coating of the following layer sequence: Gl/$SiO_xC_y$/$SnO_2$:F roughness Rq 9 to 12 nm, by CVD | |
| TCO3 | TCO-based insulating coating of the following layer sequence: Gl/$SiO_xC_y$/$SnO_2$:F roughness Rq 5 to 7 nm, by CVD and polishing | |
| Metal1 | Silver-based insulating coating, comprising a single silver functional layer, of the following layer sequence staring from the glass: $TiO_x$ (18-30nm)/$Ti_xZr_yO_z$ (4-8nm)/ZnO(1-4nm)/Ag(11-15nm)/ZnO:Al(1-4nm)/$TiO_2$(5-10nm)$Zn_xSn_yO_z$(25-37nm)/$Si_3N_4$(15-25nm)/$Ti_xZr_yO_z$(3-10nm) | |
| Metal2 | Silver-based insulating coating, comprising a single silver functional layer, of the following layer sequence staring from the glass: $TiO_x$ (20-30nm)/$Ti_xZr_yO_z$ (0-11nm)/ZnO(2-5nm)/Ag(15-19nm)/$TiO_x$(11-20nm)/$Zn_xSn_yO_z$(9-15nm)/$Si_3N_4$(16-23nm)/$Ti_xZr_yO_z$(3-10nm) | |

Acceptable opto-energetical performances were reached for all examples. Slightly better heat insulating properties and higher transmittance were obtained with TCO2 and TCO3.

Examples using TCO3 were found be particularly resistant to the appearance of scratches during processing on a multiple glazing assembly line. The transport of magnetron sputtered transparent conductive oxides of aluminium doped zinc oxide and ITO was also tested on a multiple glazing assembly line. They proved to be less frequently scratched than metal based insulating layers, but more sensitive than chemical vapor deposited transparent conductive oxides.

## Claims

1. A multiple glazing unit comprising at least three glass panes, two outermost glass panes and at least one inner glass pane, wherein at least two intermediate gas-filled cavities each lie between two glass panes, **characterized in that** said at least one inner glass pane bearing one metal-based insulating coating on one face and one transparent conductive oxide-based (TCO-based) insulating coating on the opposite face, wherein the metal-based insulating coating comprises an alternating arrangement of n infrared reflecting metallic functional layers comprising silver, and n+1 dielectric films, with n > 1, such that each functional layer is surrounded by dielectric films, and wherein the TCO-based insulating coating comprises a TCO layer chosen from mixed indium tin oxide, tin oxide doped with fluorine, tin oxide doped with antimony, aluminum-doped ZnO, gallium-doped ZnO, gallium and aluminum co-doped ZnO, and niobium-doped titanium oxide ($TiO_2$:Nb).

2. Multiple glazing unit according to claim 1 **characterized in that** the TCO-based coating has an average roughness Rq of less than 12 nm.

3. Multiple glazing unit according to any one of the preceding claims **characterized in that** the TCO-based coating comprises a TCO layer and an iridescence suppressing film in between the glass pane and the TCO layer.

4. Multiple glazing unit according to claim 3 **characterized in that** the iridescence suppressing film comprises at least one layer having a refractive index at a wavelength of 550 nm of between 1.7 and 2.5 .

5. Multiple glazing unit according to claim 3 **characterized in that** the iridescence suppressing film comprises, in sequence as counted from the pane surface, a first layer having a refractive index at a wavelength of 550 nm of between 1.7 and 2.5 and a second layer having a refractive index at a wavelength of 550nm of between 1.4 and 1.68.

6. Multiple glazing unit according to any one preceding claim **characterized in that** the TCO-based coating comprises a TCO layer and a layer chosen from silicon nitride or silicon oxide positioned above the TCO layer.

7. Multiple glazing unit according to any one preceding claim **characterized in that** the TCO-based coating comprises a TCO layer and a layer of silicon oxide having a thickness in the range from 40 to 90 nm above the TCO layer.

8. Multiple glazing unit according to any one preceding claim **characterized in that** it comprises on at least part of one or both of its outermost glass panes a coating chosen among an solar-control coating, enamel coating, a paint coating, an electrochromic coating or a thermochromic coating.

9. Multiple glazing unit according to any one preceding claim **characterized in that** at least one of the two outermost glass panes is formed from at least two glass sheets laminated by at least one polymer interlayer.

10. Multiple glazing unit according to any one preceding claim **characterized in that** the at least one inner glass pane of the multiple glazing unit has a smaller dimension of length and/or width than at least one of the two outermost glass panes.

11. Multiple glazing unit according to claim 10 **characterized in that** the at least one inner glass pane of the multiple glazing unit has a smaller dimension of length and/or width than the two outermost glass panes and **in that** the multiple glazing unit further comprises an interspace in between the two outermost glass panes along at least one edge of the multiple glazing unit and at least one mechanical element chosen from a structural element and an element of an opening or sliding mechanism at least partly positioned within the interspace.

12. Multiple glazing unit according to any one preceding claims **characterized in that** any one or more of the two outermost glass panes and the at least one inner glass pane has a light transmittance of 91 to 92% measured according to standard EN410.

13. Multiple glazing unit according to any one preceding claims **characterized in that** the edges of the metal-based insulating coating have been removed.

14. Multiple glazing unit according to any one of claims 2 to 13 **characterized in that** the dielectric films comprise one or more dielectric layers chosen from the nitrides, oxides or oxy nitrides of silicon, aluminium, tin, zinc, titanium, zirconium or niobium or from a mixture of two or more of the nitrides, oxides or oxy nitrides of silicon, aluminium, tin, zinc, titanium, zirconium or niobium.

15. Multiple glazing unit according to any one of claims 2 to 13 **characterized in that** the metal-based insulating coating further comprises at least one contact layer comprising a material chosen from zinc oxide, optionally doped with aluminium or gallium, titanium, nickel, chromium, palladium, tungsten, niobium, oxides or sub-oxides of titanium, nickel, chromium, palladium, tungsten, or niobium, nitrides or oxynitrides of titanium, nickel, chromium, palladium, tungsten, or niobium.

16. Multiple glazing unit according to any preceding claim **characterized in that** the at least one inner glass pane comprises two glass sheets assembled with a polymer interlayer.

17. Process for assembling a multiple glazing unit comprising:

- providing a first outermost glass pane,
- providing an inner glass pane,
- providing a second outermost glass pane,
- transporting the first outermost glass pane, the inner glass pane, and second outermost glass pane on a conveyor,

**characterized in that** the inner glass pane bears one metal-based insulating coating on one face and one transparent conductive oxide-based insulating coating on the opposite face and **in that** the inner glass pane is transported on the conveyor with the face bearing the transparent conductive oxide-based insulating coating in contact with the conveyor, wherein the metal-based insulating coating comprises an alternating arrangement of n infrared reflecting metallic functional layers comprising silver, and n+1 dielectric films, with n > 1, such that each functional layer is surrounded by dielectric films, and

wherein the TCO-based insulating coating comprises a TCO layer chosen from mixed indium tin oxide, tin oxide doped with fluorine, tin oxide doped with antimony, aluminum-doped ZnO, gallium-doped ZnO, gallium and aluminum co-doped ZnO, and niobium-doped titanium oxide ($TiO_2$:Nb).

**Patentansprüche**

1. Mehrfachverglasungseinheit, umfassend mindestens drei Glasscheiben, zwei äußerste Glasscheiben und mindestens eine innere Glasscheibe, wobei mindestens zwei dazwischen liegende gasgefüllte Hohlräume jeweils zwischen zwei Glasscheiben liegen, **dadurch gekennzeichnet, dass** mindestens eine innere Glasscheibe auf einer Seite eine metallbasierte Isolierbeschichtung und auf der gegenüberliegenden Seite eine transparente, auf leitfähigem Oxid basierte (TCO-basierte) Isolierbeschichtung trägt,

wobei die metallbasierte Isolierbeschichtung eine alternierende Anordnung von n Infrarot-reflektierenden metallischen funktionalen Schichten, die Silber umfassen, und n+1 dielektrischen Schichten umfasst, mit n > 1, so dass jede funktionale Schicht von dielektrischen Filmen umgeben ist, und

wobei die TCO-basierte Isolierbeschichtung eine TCO-Schicht ausgewählt aus gemischtem Indiumzinnoxid, mit Fluor dotiertem Zinnoxid, mit Antimon dotiertem Zinnoxid, Aluminium-dotiertem ZnO, Gallium-dotiertem ZnO, Gallium- und Aluminium-kodotiertem ZnO und Niob-dotiertem Titanoxid ($TiO_2$:Nb) umfasst.

2. Mehrfachverglasungseinheit nach Anspruch 1, **dadurch gekennzeichnet, dass** die TCO-basierte Beschichtung eine durchschnittliche Rauheit Rq von weniger als 12 nm aufweist.

3. Mehrfachverglasungseinheit nach einem der vorhergehenden Ansprüche, **dadurch gekennzeichnet, dass** die TCO-basierte Beschichtung eine TCO-Schicht und einen Irideszenz unterdrückenden Film zwischen der Glasscheibe und der TCO-Schicht umfasst.

4.  Mehrfachverglasungseinheit nach Anspruch 3, **dadurch gekennzeichnet, dass** der Irideszenz unterdrückende Film mindestens eine Schicht mit einem Brechungsindex bei einer Wellenlänge von 550 nm zwischen 1,7 und 2,5 umfasst.

5.  Mehrfachverglasungseinheit nach Anspruch 3, **dadurch gekennzeichnet, dass** der Irideszenz unterdrückende Film in der von der Scheibenoberfläche gezählten Reihenfolge eine erste Schicht mit einem Brechungsindex bei einer Wellenlänge von 550 nm zwischen 1,7 und 2,5 und eine zweite Schicht mit einem Brechungsindex bei einer Wellenlänge von 550 nm zwischen 1,4 und 1,68 umfasst.

6.  Mehrfachverglasungseinheit nach einem der vorhergehenden Ansprüche, **dadurch gekennzeichnet, dass** die TCO-basierte Beschichtung eine TCO-Schicht und eine Schicht ausgewählt aus Siliciumnitrid oder Siliciumoxid, die über der TCO-Schicht positioniert ist, umfasst.

7.  Mehrfachverglasungseinheit nach einem der vorhergehenden Ansprüche, **dadurch gekennzeichnet, dass** die TCO-basierte Beschichtung eine TCO-Schicht und eine Siliciumoxidschicht mit einer Dicke im Bereich von 40 bis 90 nm über der TCO-Schicht umfasst.

8.  Mehrfachverglasungseinheit nach einem der vorhergehenden Ansprüche, **dadurch gekennzeichnet, dass** sie auf mindestens einem Teil von einer oder beiden ihrer äußersten Glasscheiben eine Beschichtung ausgewählt aus einer Sonnenschutzbeschichtung, einer Emailbeschichtung, einer Farbbeschichtung, einer elektrochromen Beschichtung oder einer thermochromen Beschichtung umfasst.

9.  Mehrfachverglasungseinheit nach einem der vorhergehenden Ansprüche, **dadurch gekennzeichnet, dass** mindestens eine der beiden äußersten Glasscheiben aus mindestens zwei Glasscheiben gebildet ist, die mit mindestens einer Polymerzwischenschicht laminiert sind.

10. Mehrfachverglasungseinheit nach einem der vorhergehenden Ansprüche, **dadurch gekennzeichnet, dass** die mindestens eine innere Glasscheibe der Mehrfachverglasungseinheit eine kleinere Abmessung der Länge und/oder Breite als mindestens eine der beiden äußersten Glasscheiben aufweist.

11. Mehrfachverglasungseinheit nach Anspruch 10, **dadurch gekennzeichnet, dass** die mindestens eine innere Glasscheibe der Mehrfachverglasungseinheit eine kleinere Abmessung der Länge und/oder Breite als die beiden äußersten Glasscheiben aufweist, und dass die Mehrfachverglasungseinheit ferner einen Zwischenraum zwischen den beiden äußersten Glasscheiben entlang mindestens einer Kante der Mehrfachverglasungseinheit und mindestens ein mechanisches Element ausgewählt aus einem Strukturelement und einem Element eines Öffnungs- oder Schiebemechanismus umfasst, der mindestens teilweise in dem Zwischenraum positioniert ist.

12. Mehrfachverglasungseinheit nach einem der vorhergehenden Ansprüche, **dadurch gekennzeichnet, dass** eine oder mehrere der beiden äußersten Glasscheiben und die mindestens eine innere Glasscheibe eine Lichtdurchlässigkeit von 91 bis 92 %, gemessen nach Norm EN410, aufweist.

13. Mehrfachverglasungseinheit nach einem der vorhergehenden Ansprüche, **dadurch gekennzeichnet, dass** die Kanten der metallbasierten Isolierbeschichtung entfernt wurden.

14. Mehrfachverglasungseinheit nach einem der Ansprüche 2 bis 13, **dadurch gekennzeichnet, dass** die dielektrischen Filme eine oder mehrere dielektrische Schichten ausgewählt aus den Nitriden, Oxiden oder Oxynitriden von Silicium, Aluminium, Zinn, Zink, Titan, Zirconium oder Niob oder aus einer Mischung von zwei oder mehr der Nitride, Oxide oder Oxynitride von Silicium, Aluminium, Zinn, Zink, Titan, Zirkonium oder Niob umfassen.

15. Mehrfachverglasungseinheit nach einem der Ansprüche 2 bis 13, **dadurch gekennzeichnet, dass** die metallbasierte Isolierbeschichtung weiterhin mindestens eine Kontaktschicht umfasst, die ein Material ausgewählt aus Zinkoxid, gegebenenfalls dotiert mit Aluminium oder Gallium, Titan, Nickel, Chrom, Palladium, Wolfram, Niob, Oxiden oder Suboxiden von Titan, Nickel, Chrom, Palladium, Wolfram, oder Niob, Nitriden oder Oxynitriden von Titan, Nickel, Chrom, Palladium, Wolfram oder Niob umfasst.

16. Mehrfachverglasungseinheit nach einem der vorhergehenden Ansprüche, **dadurch gekennzeichnet, dass** die mindestens eine innere Glasscheibe zwei Glasscheiben umfasst, die mit einer Polymerzwischenschicht montiert sind.

**17.** Verfahren zur Montage einer Mehrfachverglasungseinheit, umfassend:

- Bereitstellen einer ersten äußersten Glasscheibe,
- Bereitstellen einer inneren Glasscheibe,
- Bereitstellen einer zweiten äußersten Glasscheibe,
- Transportieren der ersten äußersten Glasscheibe, der inneren Glasscheibe und der zweiten äußersten Glasscheibe auf einem Förderband,

**dadurch gekennzeichnet, dass** die innere Glasscheibe auf einer Seite eine metallbasierte Isolierbeschichtung und auf der gegenüberliegenden Seite eine transparente, auf leitfähigem Oxid basierte Isolierbeschichtung aufweist, und dass die innere Glasscheibe auf dem Förderband mit der Seite, welche die transparente, auf leitfähigem Oxid basierte Isolierbeschichtung trägt, in Kontakt mit dem Förderband transportiert wird,

wobei die metallbasierte Isolierbeschichtung eine alternierende Anordnung von n Infrarot-reflektierenden metallischen funktionalen Schichten, die Silber umfassen, und n+1 dielektrischen Schichten umfasst, mit n > 1, so dass jede funktionale Schicht von dielektrischen Filmen umgeben ist, und

wobei die TCO-basierte Isolierbeschichtung eine TCO-Schicht ausgewählt aus gemischtem Indiumzinnoxid, mit Fluor dotiertem Zinnoxid, mit Antimon dotiertem Zinnoxid, Aluminium-dotiertem ZnO, Gallium-dotiertem ZnO, Gallium- und Aluminium-kodotiertem ZnO und Niob-dotiertem Titanoxid ($TiO_2$:Nb) umfasst.

## Revendications

**1.** Unité de vitrage multiple comprenant au moins trois vitres, deux vitres les plus à l'extérieur et au moins une vitre intérieure, dans laquelle au moins deux cavités intermédiaires remplies de gaz se trouvent chacune entre deux vitres, **caractérisée en ce que** ladite au moins une vitre intérieure porte un revêtement isolant à base de métal sur une face et un revêtement isolant à base d'oxyde transparent conducteur (à base de TCO) sur la face opposée,

dans laquelle le revêtement isolant à base de métal comprend un agencement alterné de n couches fonctionnelles métalliques réfléchissant les infrarouges comprenant de l'argent, et n+1 films diélectriques, avec n > 1, de sorte que chaque couche fonctionnelle est entourée par des films diélectriques, et

dans laquelle le revêtement isolant à base de TCO comprend une couche de TCO choisie parmi l'oxyde d'étain et d'indium mixte, l'oxyde d'étain dopé au fluor, l'oxyde d'étain dopé à l'antimoine, ZnO dopé à l'aluminium, ZnO dopé au gallium, ZnO co-dopé au gallium et à l'aluminium, et l'oxyde de titane dopé au niobium ($TiO_2$:Nb).

**2.** Unité de vitrage multiple selon la revendication 1, **caractérisée en ce que** le revêtement à base de TCO présente une rugosité moyenne Rq inférieure à 12 nm.

**3.** Unité de vitrage multiple selon l'une quelconque des revendications précédentes, **caractérisée en ce que** le revêtement à base de TCO comprend une couche de TCO et un film de suppression d'iridescence entre la vitre et la couche de TCO.

**4.** Unité de vitrage multiple selon la revendication 3, **caractérisée en ce que** le film de suppression d'iridescence comprend au moins une couche ayant un indice de réfraction à une longueur d'onde de 550 nm compris entre 1,7 et 2,5.

**5.** Unité de vitrage multiple selon la revendication 3, **caractérisée en ce que** le film de suppression d'iridescence comprend, en séquence comme compté à partir de la surface de la vitre, une première couche ayant un indice de réfraction à une longueur d'onde de 550 nm compris entre 1,7 et 2,5 et une seconde couche ayant un indice de réfraction à une longueur d'onde de 550 nm compris entre 1,4 et 1,68.

**6.** Unité de vitrage multiple selon l'une quelconque des revendications précédentes, **caractérisée en ce que** le revêtement à base de TCO comprend une couche de TCO et une couche choisie parmi le nitrure de silicium ou l'oxyde de silicium positionnée au-dessus de la couche de TCO.

**7.** Unité de vitrage multiple selon l'une quelconque des revendications précédentes, **caractérisée en ce que** le revêtement à base de TCO comprend une couche de TCO et une couche d'oxyde de silicium ayant une épaisseur dans la plage de 40 à 90 nm au-dessus de la couche de TCO.

8. Unité de vitrage multiple selon l'une quelconque des revendications précédentes, **caractérisée en ce qu'**elle comprend sur au moins une partie de l'une ou des deux de ses vitres les plus à l'extérieur un revêtement choisi parmi un revêtement à contrôle solaire, un revêtement d'émail, un revêtement de peinture, un revêtement électrochromique ou un revêtement thermochromique.

9. Unité de vitrage multiple selon l'une quelconque des revendications précédentes, **caractérisée en ce qu'**au moins l'une des deux vitres les plus à l'extérieur est formée d'au moins deux feuilles de verre stratifiées par au moins une couche intermédiaire de polymère.

10. Unité de vitrage multiple selon l'une quelconque des revendications précédentes, **caractérisée en ce que** l'au moins une vitre intérieure de l'unité de vitrage multiple a une dimension de longueur et/ou de largeur plus petite qu'au moins l'une des deux vitres les plus à l'extérieur.

11. Unité de vitrage multiple selon la revendication 10, **caractérisée en ce que** l'au moins une vitre intérieure de l'unité de vitrage multiple a une dimension de longueur et/ou de largeur plus petite que les deux vitres les plus à l'extérieur et **en ce que** l'unité de vitrage multiple comprend en outre un espace intermédiaire entre les deux vitres les plus à l'extérieur le long d'au moins un bord de l'unité de vitrage multiple et au moins un élément mécanique choisi parmi un élément structural et un élément d'un mécanisme d'ouverture ou de coulissement au moins partiellement positionné dans l'espace intermédiaire.

12. Unité de vitrage multiple selon l'une quelconque des revendications précédentes, **caractérisée en ce que** l'une quelconque ou plusieurs des deux vitres de verre les plus à l'extérieur et l'au moins une vitre intérieure ont une transmittance de lumière de 91 à 92 % mesurée conformément à la norme EN410.

13. Unité de vitrage multiple selon l'une quelconque des revendications précédentes, **caractérisée en ce que** les bords du revêtement isolant à base de métal ont été enlevés.

14. Unité de vitrage multiple selon l'une quelconque des revendications 2 à 13, **caractérisée en ce que** les films diélectriques comprennent une ou plusieurs couches diélectriques choisies parmi les nitrures, oxydes ou oxynitrures de silicium, aluminium, étain, zinc, titane, zirconium ou niobium ou à partir d'un mélange de deux ou plusieurs des nitrures, oxydes ou oxynitrures de silicium, aluminium, étain, zinc, titane, zirconium ou niobium.

15. Unité de vitrage multiple selon l'une quelconque des revendications 2 à 13, **caractérisée en ce que** le revêtement isolant à base de métal comprend en outre au moins une couche de contact comprenant un matériau choisi parmi l'oxyde de zinc, éventuellement dopé avec de l'aluminium ou du gallium, le titane, le nickel, le chrome, le palladium, le tungstène, le niobium, les oxydes ou sous-oxydes de titane, nickel, chrome, palladium, tungstène ou niobium, les nitrures ou oxynitrures de titane, nickel, chrome, palladium, tungstène ou niobium.

16. Unité de vitrage multiple selon l'une quelconque des revendications précédentes, **caractérisée en ce que** l'au moins une vitre intérieure comprend deux feuilles de verre assemblées avec une couche intermédiaire de polymère.

17. Procédé d'assemblage d'une unité de vitrage multiple comprenant :

   - la fourniture d'une première vitre la plus à l'extérieur,
   - la fourniture d'une vitre intérieure,
   - la fourniture d'une deuxième vitre la plus à l'extérieur,
   - le transport de la première vitre la plus à l'extérieur, la vitre intérieure et la deuxième vitre la plus à l'extérieur sur un convoyeur,

      **caractérisé en ce que** la vitre intérieure porte sur une face une couche isolante à base de métal et sur la face opposée une couche isolante à base d'oxyde conducteur transparent et **en ce que** la vitre intérieure est transportée sur le convoyeur avec la face portant la couche isolante à base d'oxyde conducteur transparent en contact avec le convoyeur,
      dans laquelle le revêtement isolant à base de métal comprend un agencement alterné de n couches fonctionnelles métalliques réfléchissant les infrarouges comprenant de l'argent, et n+1 films diélectriques, avec n > 1, de sorte que chaque couche fonctionnelle est entourée par des films diélectriques, et dans laquelle le revêtement isolant à base de TCO comprend une couche de TCO choisie parmi l'oxyde d'étain et d'indium mixte, l'oxyde d'étain dopé au fluor, l'oxyde d'étain dopé à l'antimoine, ZnO dopé à l'aluminium, ZnO dopé au gallium, ZnO co-dopé au gallium et à l'aluminium, et l'oxyde de titane dopé au niobium ($TiO_2$:Nb).

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011262694 A1